Europäisches Patentamt

European Patent Office

Office européen des brevets

(11) Veröffentlichungsnummer : **0 193 704**
**B1**

(12) **EUROPÄISCHE PATENTSCHRIFT**

(45) Veröffentlichungstag der Patentschrift :
05.04.89

(21) Anmeldenummer : **86100331.7**

(22) Anmeldetag : **13.01.86**

(51) Int. Cl.⁴ : **F 16 H   1/44**, F 16 H   1/455,
F 16 D 35/00, B 60 K 17/34

(54) **Allradantrieb für ein Kraftfahrzeug.**

(30) Priorität : **02.03.85 DE 3507492**

(43) Veröffentlichungstag der Anmeldung :
**10.09.86 Patentblatt 86/37**

(45) Bekanntmachung des Hinweises auf die Patenterteilung : **05.04.89 Patentblatt 89/14**

(84) Benannte Vertragsstaaten :
**AT CH DE FR GB IT LI NL SE**

(56) Entgegenhaltungen :
**DE-A- 2 209 879**
**DE-A- 3 212 495**
**FR-A- 1 314 336**
**GB-A- 2 139 972**
**US-A- 2 234 591**
**US-A- 2 424 942**

(73) Patentinhaber : **Dr.Ing.h.c. F. Porsche Aktiengesellschaft**
**Porschestrasse 42**
**D-7000 Stuttgart 40 (DE)**

(72) Erfinder : **Müller, Robert**
**Badstrasse 21**
**D-7251 Mönsheim (DE)**

EP 0 193 704 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft einen Allradantrieb für ein Kraftfahrzeug nach dem Oberbegriff des Anspruchs 1.

Allradfahrzeuge mit einem Mittendifferential zwischen Vorder- und Hinterachse, das üblicherweise als Planetenrad-Differential ausgeführt ist, haben den Vorteil, daß beim Kurvenfahren oder bei unterschiedlich abgefahrenen Reifen keine Verspannungen im Antriebsstrang auftreten, wodurch der Verschleiß herabgesetzt und das Fahrverhalten verbessert wird. Zweckmäßigerweise wird das Mittendifferential so ausgelegt, daß unter Berücksichtigung der beschleunigungsbedingten Achslastverlagerung mehr Antriebskraft auf die Hinterachse übertragen wird als auf die Vorderachse. Da für die Fahrzeugbeschleunigung neben der verfügbaren Motorleistung auch der Reibwert zwischen Reifen und Straße maßgebend ist und der jeweilige Beladungszustand des Fahrzeugs sich auf die Achslastverteilung auswirkt, ist für jeden Betriebszustand nur ein ganz bestimmtes Verteilungsverhältnis der Antriebskräfte auf Vorder- und Hinterachse optimal. Als Kompromiß wird das Verteilungsverhältnis des Mittendifferentials auf einen mittleren Fahrbahnreibwert und einen mittleren Beladungszustand ausgelegt, wobei auch noch Auswirkungen auf das Fahrverhalten und das Lastwechselverhalten bei Kurvenfahrt zu berücksichtigen sind.

Bei einem aus DE-OS 32 12 495 bekannten Allradantrieb ist als Mittendifferential ein Planetenradgetriebe vorgesehen, das die Antriebsmomente Hinterachse zur Vorderachse im Verhältnis 1,25 zu 1 aufteilt. Da ein solches Mittendifferential nur eine einzige Antriebskraftverteilung liefern kann, liegt für viele Betriebszustände eine Fehlanpassung vor.

Aus GB-A-2 139 972 ist ein Kraftfahrzeug mit Allradantrieb bekannt, bei dem die Räder sowohl der Vorderachse als auch der Hinterachse ständig angetrieben und die Vorderachse und Hinterachse durch Sperren eines zwischengeschalteten Mittendifferentials starr miteinander koppelbar sind. Um eine durch Betätigen der Betriebsbremse hervorgerufene Verringerung der Umlaufgeschwindigkeit der Vorderräder nicht über den Antriebsstrang auf die Hinterräder zu übertragen, ist im Antriebsstrang als koppel- und entkoppelbare Vorrichtung ein Freilauf vorgesehen, mit dem eine vollständige Entkopplung erreicht und eine Drehmomentübertragung verhindert wird.

Die Aufgabe der Erfindung besteht darin, einen Allradantrieb für ein Kraftfahrzeug so zu gestalten, daß die zum Sperren eines Mittendifferentials benutzte Lamellenkupplung eine unterschiedliche Drehmoment-Differenzdrehzahl-Kennlinie aufweist, je nachdem, ob die Vorderachse oder die Hinterachse mangels Bodenhaftung ihrer Räder durchrutscht.

Zur Lösung dieser Aufgabe sind die im Kennzeichen des Anspruchs 1 angeführten Merkmale vorgesehen. Weitere die Erfindung ausgestaltende Merkmale enthalten die Ansprüche 2 bis 4. Mit der Erfindung wird das Anfahren des Kraftfahrzeugs auf glattem Untergrund erleichtert. Das vom Motor im ersten Gang an der Lamellenkupplung aufgebrachte Drehmoment kann in voller Höhe auf die noch greifende Vorderachse oder Hinterachse übertragen werden.

Ein Ausführungsbeispiel der Erfindung ist in der Zeichnung dargestellt und wird nachfolgend erläutert.

Es zeigt:

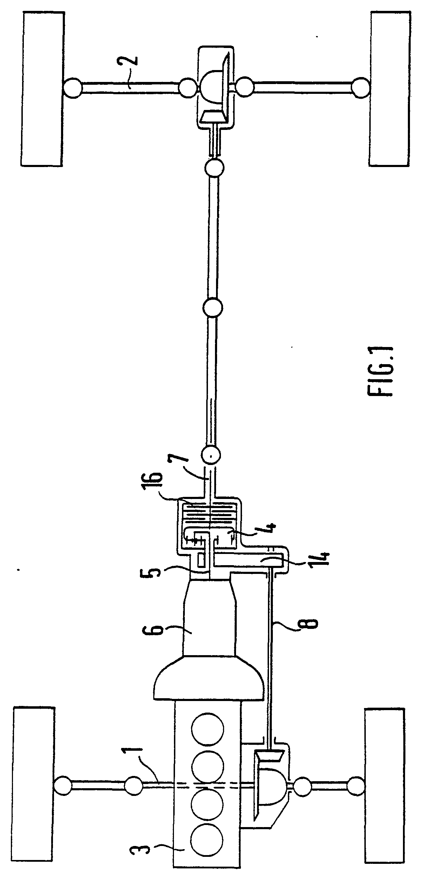

Fig. 1 Schemabild eines allradgetriebenen Kraftfahrzeugs mit Mittendifferential und Viskose-Lamellenkupplung,

Fig. 2 Drehmoment-Drehzahldifferenz-Kennlinien der Viskose-Lamellenkupplung,

Fig. 3 Längsschnitt des Mittendifferentials und der Viskose-Lamellenkupplung.

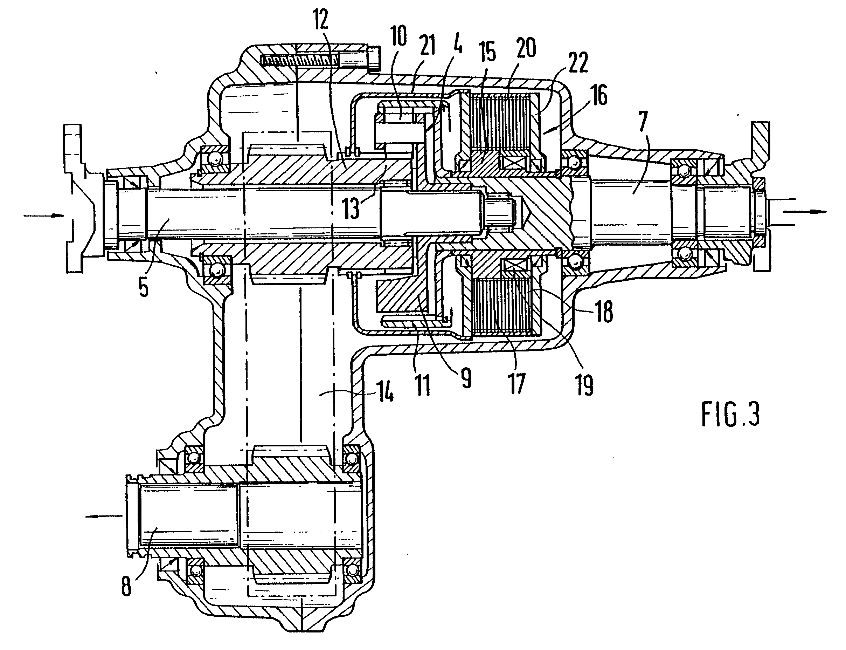

Die Hinterachse 2 und Vorderachse 1 eines Kraftfahrzeugs werden durch einen Motor 3 über ein als Planetengetriebe ausgebildetes Mittendifferential 4 permanent angetrieben. Das in Fig. 3 näher dargestellte Mittendifferential 4 besitzt eine Eingangswelle 5 vom Motor 3 bzw. Geschwindigkeitswechselgetriebe 6 her, eine Antriebswelle 7 zur Hinterachse 2 und eine weitere Antriebswelle 8 zur Vorderachse 1. Auf ein Keilprofil der Eingangswelle 5 ist die Nabe eines Planetenträgers 9 aufgesteckt, der über die auf ihm gelagerten Planetenräder 10 einerseits ein mit der Antriebswelle 7 der Hinterachse 2 verbundenes Hohlrad 11, andererseits ein auf einer Hohlwelle angebrachtes Sonnenrad 13 antreibt, das zentrisch auf der Eingangswelle 5 gelagert ist und zur Betätigung eines Kettentriebes 14 zum Antrieb der Vorderachse 1 dient.

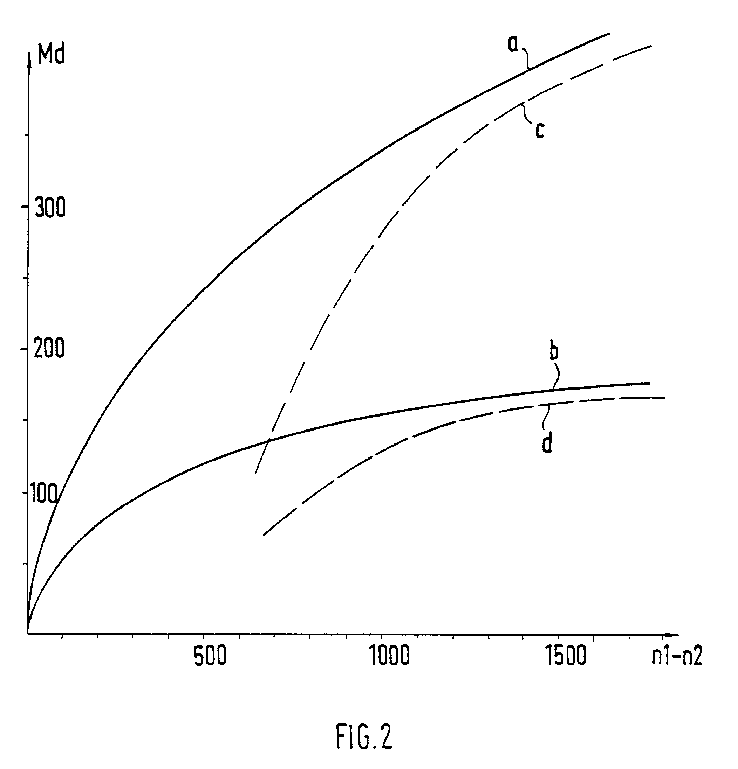

Auf der Antriebswelle 7 zur Hinterachse 2 ist eine Kupplungsnabe 15 einer Viskose-Lamellenkupplung 16 befestigt. Auf dem Außenmantel der Kupplungsnabe sind mehrere Innenlamellen 17 angebracht. Die restlichen Innenlamellen 18 sind mit der Kupplungsnabe 15 über einen Freilauf 19 verbunden. Zwischen die Innenlamellen 17, 18 greifen mit reichlichem Seitenspiel Außenlamellen 20 ein, die an der Innenseite eines auf der Kupplungsnabe 15 zentrierten und das Planetengetriebe 4 mit einer Glocke 21 übergreifenden Kupplungsgehäuses 22 befestigt sind. Die Glocke 21 ist auf einer Keilverzahnung der Hohlwelle 12 befestigt. Da das Kupplungsgehäuse 22 mit einer Flüssigkeit hoher Viskosität gefüllt ist, ist bei einer Relativgeschwindigkeit zwischen Innenlamellen 17, 18 und Außenlamellen 20 durch die Scherkraft der Flüssigkeit ein Drehmoment Md übertragbar, das gemäß Fig. 2 degressiv mit der Drehzahldifferenz $n_1 - n_2$ ansteigt.

Wenn die Hinterachse 2 auf glatter Fahrbahn durchrutscht, sind alle Innenlamellen 17 und 18 für eine Drehmomentübertragung wirksam. Es ergibt sich hier die steil ansteigende Kennlinie a. Rutscht dagegen die Vorderachse 1 durch, so sind die Innenlamellen 18 über den Freilauf 19 abgekoppelt. Das übertragbare Drehmoment ist über den ganzen Drehzahlbereich geringer und verläuft nach der flach ansteigenden Kennlinie b. Die Kennlinien a bzw. b liegen oberhalb der zugehörigen Kennlinien c bzw. d für das vom Motor im ersten Gang an der Viskose-Lamellenkupplung 15 aufgebrachte Drehmoment, so daß das Motordrehmoment in voller Höhe auf die noch greifende Achse 1 oder 2 übertragen werden kann.

## Patentansprüche

1. Allradantrieb für ein Kraftfahrzeug, mit einem durch eine Lamellenkupplung (16) sperrbaren Mittendifferential (14) zwischen Vorderachse und Hinterachse, dadurch gekennzeichnet, daß die Lamellenkupplung (16) aus am umlaufenden Kupplungsgehäuse (22) drehfesten Außenlamellen (20) und mit ihnen in Antriebsverbindung stehenden Innenlamellen (17, 18) besteht, die auf der mit der Antriebswelle drehfesten Kupplungsnabe angeordnet sind, und daß bei Drehmomentübertragung in der einen Richtung nur eine Teilanzahl der Innenlamellen (17) mit den Außenlamellen (20) in Antriebsverbindung steht, wogegen die anderen Innenlamellen (18) abgekoppelt sind, so daß die Lamellenkupplung (16) bei Drehmomentübertragung in der einen Richtung (von der Hinterachse 1 zur Vorderachse 2) eine andere Drehmoment-Differenzdrehzahl-Kennlinie aufweist als in der anderen Richtung (von der Vorderachse 2 zur Hinterachse 1).

2. Allradantrieb nach Anspruch 1, dadurch gekennzeichnet, daß die nicht in Antriebsverbindung stehenden Innenlamellen (18) über einen Freilauf (19) mit der Kupplungsnabe (15) verbunden sind.

3. Allradantrieb nach Anspruch 1 und 2, dadurch gekennzeichnet, daß die Außenlamellen (20) mit Innenlamellen (17) zur Drehmomentübertragung aneinander anliegen und das Drehmoment durch mechanische Reibung übertragen.

4. Allradantrieb nach Anspruch 1 und 2, dadurch gekennzeichnet, daß die Lamellenkupplung (16) als Viskose-Lamellenkupplung ausgebildet ist, die mit Flüssigkeit hoher Viskosität gefüllt ist, wobei das Drehmoment von den Innenlamellen (17, 18) zu den Außenlamellen (20) über Flüssigkeitsreibung übertragen wird.

## Claims

1. All-wheel drive for a motor vehicle, with a central differential (4) between the front axle and back axle and which is lockable by a disc clutch (16), characterised in that the disc clutch (16) consists of non-rotary outer discs (20) on the rotating clutch housing (22) and inner discs (17, 18) in driving connection therewith, the inner discs being located on the clutch hub attached in a non-rotary manner to the drive shaft and that when torque is transmitted in one direction, only some of the inner discs (17) are in driving connection with the outer discs (20), whereas the other inner discs (18) are disconnected, so that when torque is transmitted in one direction (from the back axle 1 to the front axle 2), the disc clutch (16) has a different torque/differential speed characteristic than in the other direction (from the front axle 2 to the back axle 1).

2. All-wheel drive according to Claim 1, characterised in that the inner discs (18) which are not in driving connection are connected by way of a freewheel (19) to the clutch hub (15).

3. All-wheel drive according to Claims 1 and 2, characterised in that the outer discs (20) with the inner discs (17) bear one against the other for the transmission of torque and transmit the torque by mechanical friction.

4. All-wheel drive according to Claims 1 and 2, characterised in that the disc clutch (16) is constructed as a visco-hydraulic disc clutch, which is filled with liquid of high viscosity, the torque being transmitted from the inner discs (17, 18) to the outer discs (20) by way of liquid friction.

## Revendications

1. Transmission à toutes les roues pour un véhicule automobile, avec un différentiel central (14) pouvant être bloqué au moyen d'un accouplement à disques (16), disposé entre l'essieu avant et l'essieu arrière, caractérisée par le fait que l'accouplement à disques (16) est constitué par des disques extérieurs (20) solidaires en rotation avec un carter d'accouplement rotatif (22) et par des disques intérieurs (17, 18) qui sont en liaison d'entraînement avec lesdits disques extérieurs et qui sont disposés sur le moyeu (15) de l'accouplement solidaire en rotation avec l'arbre menant, et que pour un sens de transmission du couple seule une partie des disques intérieurs (17) est en liaison d'entraînement avec les disques extérieurs (20) tandis que les autres disques intérieurs (18) se trouvent découplés, de sorte que pour l'une des directions de transfert du couple (de l'essieu arrière vers l'essieu avant) l'accouplement à disques (16) présente une caractéristique de couple en fonction de la différence des vitesses de rotation qui est différente de celle qu'il présente pour une transmission dans la direction inverse (de l'essieu avant vers l'essieu arrière).

2. Transmission à toutes les roues selon la revendication 1, caractérisée par le fait que les disques intérieurs (18) qui ainsi ne sont pas en liaison d'entraînement sont réunis au moyeu (15) de l'entraînement par l'intermédiaire d'une roue libre (19).

3. Transmission à toutes les roues selon les revendications 1 et 2, caractérisé, par le fait que pour le transfert du couple les disques extérieurs (20) et les disques intérieurs (17) sont plaqués les uns contre les autres et transmettent le couple par friction mécanique.

4. Transmission à toutes les roues selon les revendications 1 et 2, caractérisée par le fait que l'accouplement à disques (16) est réalisé sous la forme d'un accouplement par viscosité, qui est rempli avec un liquide à viscosité élevée, le couple étant transmis des disques intérieurs (17, 18) vers les disques extérieurs (20) par frottement visqueux.

FIG.1

1

FIG.2

FIG.3

EP 0 193 704 B1